# EUROPEAN PATENT APPLICATION

(11) **EP 3 493 484 A1**
(43) Date of publication of application: **05.06.2019**
(21) Application number: 17306697.8
(22) Date of filing: 04.12.2017
(51) Int. Cl.: H04L 12/58

(54) **DEVICES, SYSTEMS AND METHODS FOR COMMUNICATION IN AN IOT ENVIRONMENT**

(71) Applicant: THOMSON LICENSING, 92130 Issy les Moulineaux (FR)
(72) Inventor: SRINIVASAN, Sreedevi, 600004 Chennai (IN); EKAMBARAM, Gangatharan, 600114 Chennai (IN); JAGADEESAN, Sarvika, 636403 SALEM (IN); MURALEEDHARAN, Yamuna, 600100 Chennai (IN)
(74) Representative: Vidon Brevets & Stratégie

(57) **Abstract**

The present disclosure provides devices (102, 104, 130, 300, 350, 370), systems (100), and methods (500, 550, 600) for communication with and between Internet of Things (IoT) devices (102, 300, 350) in an IoT environment (100) using human-readable language. In one aspect of the present disclosure, at least one table (204, 208) is provided that defines notational identifiers and strings to control the IoT devices (102, 300, 350) in the IoT environment (100). Using the notational identifiers and strings in the at least one table (204, 208), a user sends text-based messages to IoT devices (102, 300, 350) in the IoT environment (100) to control the IoT devices (102, 300, 350). The IoT devices (102, 300, 350) use the at least one table (204, 208) to determine commands associated with the notational identifiers and strings in the text-based messages. In this way, the present disclosure enables humans and IoT devices (102, 204, 208) to communicate via text-based messages sent through text-based communication platforms (120).

## Description

### TECHNICAL FIELD

The present disclosure generally relates to the Internet of Things (IoT). More particularly, the present disclosure is related to devices, systems and methods for communication in an IoT environment.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

The development of the Internet of Things (IoT) has provided a platform to implement solutions to make the life of a user simpler and safer. However, the development of IoT has also introduced certain challenges. For example, communication with IoT devices (e.g., sensors and other IoT devices) can often be cumbersome and inefficient from the perspective of an end user. This makes it difficult for users to create rules and/or have other meaningful communication with IoT devices.

Today, disparate user interfaces (UIs) are made as per service provider and/or product manufacturer preferences that result in an unwanted burden for an end user attempting to communicate with one or more IoT devices. Typically, UIs for IoT devices are graphical Web or mobile-based UIs that require users to navigate through multiple UI pages to communicate with an IoT device (e.g., create a rule). The differing user interfaces (UIs) existing for different IoT devices and/or IoT hubs in communication with IoT devices, require a user to remember the ins and outs of each different UI.

With the ever-increasing proliferation of IoT devices and other network-connected devices, a need exists for techniques that enables efficient communication with and between all IoT devices that are and will be in use.

### SUMMARY

The present disclosure provides devices, systems, and methods for communication with and between Internet of Things (IoT) devices in an IoT environment using human-readable language.

In one aspect of the present disclosure, a method is provided including providing at least one table for an IoT environment including a plurality of IoT devices, the at least one table defining notational identifiers and strings to control the plurality of IoT devices; receiving a text-based message, the text-based message including at least a first notational identifier, a first string, a second notational identifier, and a second string, the first notational identifier identifying the first string as being associated with at least one attribute of at least one IoT device of the plurality of IoT devices, the second notational identifier identifying the second string as being associated with at least one command to be executed based on the at least one attribute of the at least one IoT device; determining the at least one command to be executed by the at least one IoT device based on the first notational identifier, the first string, the second notational identifier, the second string, and the at least one table; and executing the at least one command.

In another aspect of the present disclosure, an IoT device is provided including a communication module configured to receive a text-based message, the text-based message including at least a first notational identifier, a first string, a second notational identifier, and a second string, the first notational identifier identifying the first string as being associated with at least one attribute of the IoT device, the second notational identifier identifying the second string as being associated with at least one command to be executed based on the at least one attribute of the IoT device; a text analyzer configured to determine the at least one command to be executed by the IoT device based on the first notational identifier, the first string, the second notational identifier, the second string, and at least one table, the at least one table defining notational identifiers and strings to control a plurality of IoT devices in an IoT environment; and a command module configured to execute the at least one command.

In another aspect of the present disclosure, a method is provided including receiving a text-based message, the text-based message including at least a first notational identifier, a first string, a second notational identifier, and a second string, the first notational identifier identifying the first string as being associated with at least one attribute of at least one IoT device of a plurality of IoT devices in an IoT environment, the second notational identifier identifying the second string as being associated with at least one command to be executed based on the at least one attribute of the at least one IoT device; determining the at least one command to be executed by the at least one IoT device based on the first notational identifier, the first string, the second notational identifier, the second string, and at least one table, the at least one table defining notational identifiers and strings to control the plurality of IoT devices; translating the at least one command to a format compatible with the at least one IoT device, and transmitting the at least one translated command to the at least one IoT device.

In another aspect of the present disclosure, an apparatus is provided including a communication module configured to receive a text-based message, the text-based message including at least a first notational identifier, a first string, a second notational identifier, and a second string, the first notational identifier identifying the first string as being associated with at least one attribute of at least one IoT device of a plurality of IoT devices in an IoT environment, the second notational identifier identifying the second string as being associated with at least one command to be executed based on the at least one attribute of the at least one IoT device; a text analyzer configured to determine the at least one command to be executed by the at least one IoT device based on the first notational identifier, the first string, the second notational identifier, the second string, and at least one table, the at least one table defining notational identifiers and strings to control the plurality of IoT devices; and a message generator configured to translate the at least one command to a format compatible with the at least one IoT device, wherein the communication module is further configured to transmit the at least one translated command to the at least one IoT device.

In accordance with an aspect of the present principles, an embodiment of a method comprises: providing at least one table for an Internet of Things environment including a plurality of IoT devices, the at least one table defining notational identifiers and strings to control the plurality of IoT devices; receiving a text-based message, the text-based message including at least a first notational identifier, a first string, a second notational identifier, and a second string, the first notational identifier identifying the first string as being associated with at least one attribute of at least one IoT device of the plurality of IoT devices, the second notational identifier identifying the second string as being associated with at least one command to be executed based on the at least one attribute of the at least one IoT device; determining the at least one command to be executed by the at least one IoT device based on the first notational identifier, the first string, the second notational identifier, the second string, and the at least one table; and executing the at least one command.

In accordance with another aspect of the present principles, an embodiment of a method including a text-based message as described herein may further comprise the text-based message including identifying information associated with the at least one IoT device.

In accordance with another aspect of the present principles, an embodiment of a method as described herein may further comprise identifying information including a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

In accordance with another aspect of the present principles, an embodiment of a method as described herein may further comprise the method being performed by the at least one IoT device.

In accordance with another aspect of the present principles, an embodiment of a method as described herein may further comprise a text-based message being received from at least one of a text-messaging service, a social media messaging service, or an email service.

In accordance with another aspect of the present principles, an embodiment of a method as described herein may further comprise a text-based message being received from an intermediate computing device.

In accordance with another aspect of the present principles, an embodiment of a method as described herein may further comprise the executing including setting a rule including a condition and an action to be executed if the condition is triggered.

In accordance with another aspect of the present principles, any embodiment of a method as described herein may further comprise the executing further including monitoring the at least one attribute to determine if the condition has been triggered and, if the condition has been triggered, executing the action.

In accordance with another aspect of the present principles, an embodiment of a method as described herein may further comprise the condition being whether a value associated with the attribute is above or below a threshold value and the action is transmitting an alert to at least one second device if the value is above or below the threshold value.

In accordance with another aspect of the present principles, an embodiment of a method as described herein may further comprise the at least one command being to read a value associated with the attribute and transmit the value to at least one second device.

In accordance with another aspect of the present principles, an embodiment of a method as described herein may further comprise the text-based message including a third notational identifier representing at least one operator.

In accordance with another aspect of the present principles, an embodiment of a method as described herein may further comprise the at least one table being stored in a memory of the at least one IoT device.

In accordance with another aspect of the present principles, an embodiment of a method as described herein may further comprise the at least one table is stored in a memory of a second device.

In accordance with another aspect of the present principles, an embodiment of a method as described herein may further comprise the text-based message including a third notational identifier identifying the text-based message as being intended for at least one of the plurality of IoT devices.

In accordance with another aspect of the present principles, an embodiment of an Internet of Things (IoT) device comprises: a communication module configured to receive a text-based message, the text-based message including at least a first notational identifier, a first string, a second notational identifier, and a second string, the first notational identifier identifying the first string as being associated with at least one attribute of the IoT device, the second notational identifier identifying the second string as being associated with at least one command to be executed based on the at least one attribute of the IoT device; a text analyzer configured to determine the at least one command to be executed by the IoT device based on the first notational identifier, the first string, the second notational identifier, the second string, and at least one table, the at least one table defining notational identifiers and strings to control a plurality of IoT devices in an IoT environment; and a command module configured to execute the at least one command.

In accordance with another aspect of the present principles, an embodiment of an IoT device as described herein may further comprise the text-based message further including identifying information associated with the IoT device.

In accordance with another aspect of the present principles, an embodiment of an IoT device as described herein may further comprise the identifying information including a third notational identifier, a third string, a fourth notational identifier, and a fourth string, the third notational identifier identifying the third string as being associated with a location of the IoT device and the fourth notational identifier identifying the fourth string as being associated with a name of the IoT device.

In accordance with another aspect of the present principles, an embodiment of an IoT device as described herein may further comprise the text-based message being received from at least one of a text-messaging service, a social media messaging service, or an email service.

In accordance with another aspect of the present principles, an embodiment of an IoT device as described herein may further comprise the text-based message being received from an intermediate computing device.

In accordance with another aspect of the present principles, an embodiment of an IoT device as described herein may further comprise the command module being configured to execute the at least one command by setting a rule including a condition and an action to be executed if the condition is triggered.

In accordance with another aspect of the present principles, an embodiment of an IoT device as described herein may further comprise the command module being further configured to execute the at least one command by monitoring the at least one attribute to determine if the condition has been triggered and, if the condition has been triggered, execute the action.

In accordance with another aspect of the present principles, an embodiment of an IoT device as described herein may further comprise the condition being whether a value associated with the attribute is above or below a threshold value and the action is transmitting an alert to at least one second device if the value is above or below the threshold value.

In accordance with another aspect of the present principles, an embodiment of an IoT device as described herein may further comprise the at least one command being to read a value associated with the attribute and transmit the value to at least one second device.

In accordance with another aspect of the present principles, an embodiment of an IoT device as described herein may further comprise the text-based message including a third notational identifier representing at least one operator.

In accordance with another aspect of the present principles, an embodiment of an IoT device as described herein may further comprise the at least one table being stored in a memory of the IoT device.

In accordance with another aspect of the present principles, an embodiment of an IoT device as described herein may further comprise the at least one table being stored in a memory of a second device.

In accordance with another aspect of the present principles, an embodiment of an IoT device as described herein may further comprise the text-based message including a third notational identifier identifying the text-based message as being intended for at least one of the plurality of IoT devices.

In accordance with an aspect of the present principles, an embodiment of a method comprises: receiving a text-based message, the text-based message including at least a first notational identifier, a first string, a second notational identifier, and a second string, the first notational identifier identifying the first string as being associated with at least one attribute of at least one Internet of Things (IoT) device of a plurality of IoT devices in an IoT environment, the second notational identifier identifying the second string as being associated with at least one command to be executed based on the at least one attribute of the at least one IoT device; determining the at least one command to be executed by the at least one IoT device based on the first notational identifier, the first string, the second notational identifier, the second string, and at least one table, the at least one table defining notational identifiers and strings to control the plurality of IoT devices; translating the at least one command to a format compatible with the at least one IoT device, and transmitting the at least one translated command to the at least one IoT device.

In accordance with another aspect of the present principles, an embodiment of a method as described herein may further comprise the text-based message further including identifying information associated with the at least one IoT device, and identifying, based on the identifying information, the at least one IoT device intended to receive the text-based message.

In accordance with another aspect of the present principles, an embodiment of a method as described herein may further comprise the identifying information including a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

In accordance with an aspect of the present principles, an embodiment of apparatus comprises: a communication module configured to receive a text-based message, the text-based message including at least a first notational identifier, a first string, a second notational identifier, and a second string, the first notational identifier identifying the first string as being associated with at least one attribute of at least one Internet of Things (IoT) device of a plurality of IoT in an IoT environment, the second notational identifier identifying the second string as being associated with at least one command to be executed based on the at least one attribute of the at least one IoT device; a text analyzer configured to determine the at least one command to be executed by the at least one IoT device based on the first notational identifier, the first string, the second notational identifier, the second string, and at least one table, the at least one table defining notational identifiers and strings to control the plurality of IoT devices; and a message generator configured to translate the at least one command to a format compatible with the at least one IoT device, wherein the communication module is further configured to transmit the at least one translated command to the at least one IoT device.

In accordance with another aspect of the present principles, an embodiment of apparatus as described herein may further comprise the text-based message further including identifying information associated with the at least one IoT device and the text analyzer being configured to identify, based on the identifying information, the at least one IoT device intended to receive the text-based message.

In accordance with another aspect of the present principles, an embodiment of apparatus as described herein may further comprise the identifying information including a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

In accordance with another aspect of the present principles, an embodiment comprises a non-transitory computer readable medium storing executable program instructions to cause a computer executing the instructions to perform a method according to any of claims 1 to 7.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.
FIG. 1 is a block diagram of an exemplary Internet of Things (IoT) environment in accordance with an embodiment of the present disclosure;
FIG. 2A is an exemplary vocabulary table in accordance with an embodiment of the present disclosure;
FIG. 2B is an exemplary notation table in accordance with an embodiment of the present disclosure;
FIG. 3A is a block diagram of an exemplary IoT device in accordance with an embodiment of the present disclosure;
FIG. 3B is a block diagram of an exemplary IoT device and an exemplary intermediate computing device in accordance with an embodiment of the present disclosure;
FIG. 4 is an exemplary mobile device communicating with an IoT device in accordance with an embodiment of the present disclosure;
FIG. 5A is a flowchart illustrating a method executed by an IoT device for communicating with other devices in an IoT environment in accordance with an embodiment of the present disclosure;
FIG. 5B is a flowchart illustrating a method executed by an intermediate computing device for enabling an IoT device to communicate with other devices in an IoT environment in accordance with an embodiment of the present disclosure; and
FIG. 6 is a flowchart illustrating a method executed by a user device for communicating with IoT devices in an IoT environment in accordance with an embodiment of the present disclosure.

It should be understood that the drawing(s) are for purposes of illustrating the concepts of the disclosure and is not necessarily the only possible configuration for illustrating the disclosure.

### DETAILED DESCRIPTION

It also should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure provides devices, systems, and methods for communication with and between Internet of Things (IoT) devices in an IoT environment using human-readable language.

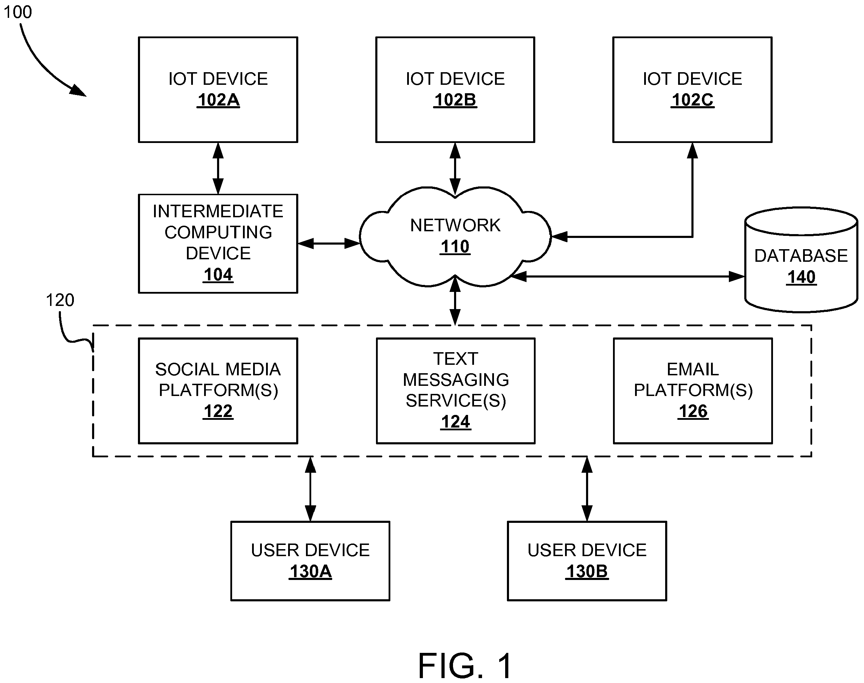

Referring to FIG. 1, an exemplary Internet of Things (IoT) environment 100 is shown in accordance with the present disclosure. Environment 100 includes one or more IoT devices 102 coupled to one or more computing devices 104, 130, and/or communication platforms 120 via a network 100. Network 100 may represent one or more hardwired and/or wireless networks suitable for providing a communication media between devices and/or servers. For example, in one embodiment, network 100 may be the Internet.

IoT device 102 may be any network-connected device configured to communicate under IoT principles. For example, IoT devices 102 may include, but are not limited to, read-only and/or read and write sensors (e.g., motion detectors, temperature sensors, etc.), smart appliances (e.g., smart refrigerators, stoves, coffee makers etc.), smart switches/actuators (e.g., light switches), smart outlets, smart home hub devices (e.g., Wink™, SmartThings™, etc.), and/or image/video capture devices (e.g., cameras, combination camera/motion detectors, etc.). IoT devices 102 may be configured to communicate with user devices 130 and/or computing devices 104 (either directly or via network 110) via any suitable communication means, including, but not limited to, Bluetooth, NFC/RFID, Zigbee, Z-wave, Wi-FI, 3G, 4G, LTE, Telecommunication Networks, Satellite, etc. In some embodiments, IoT devices 102 may be any IoT devices in or around a home or building, primarily for private use, or IoT devices in public or remote places, primarily for public use.

User devices 120 may be any computing device operable by a user to communicate with an IoT device 102. For example, user devices 120 may include, but are not limited to, desktops, laptops, smart phones/tablets, set-top boxes, etc.

Environment 100 further includes an intermediate computing device 104, such as a gateway device, that may be coupled between IoT device 102A and network 110. Intermediate computing device 104 is configured to mediate communication between an IoT device 102 and a user computing device 130 in accordance with the communication system of the present disclosure. In one embodiment, where an IoT device 102 (such as device 102A), does not include sufficient processing and/or communication capabilities to execute certain tasks associated with the communication system of the present disclosure, the intermediate computing device 104 may perform some or all the certain tasks, as will be described below.

In one embodiment, the intermediate device 104 may be a gateway device in a home or building that is responsible for providing access to communication networks outside the home or building to IoT devices on one or more local area networks in the home or building. For example, intermediate device 104 may be a gateway device providing access to one or more internet service providers, telephone service providers, and/or content service providers. The intermediate device 104 may also be a device that is responsible for providing access to communication with IoT devices disposed in public places.

In one embodiment, environment 100 includes a database 140 including information associated with each IoT device 102. For example, the information may include identifying information associated with each IoT device 102 (e.g., name, location, and electronic addresses within a network, such as, Internet Protocol (IP) addresses within network 110). As will be described below, database 140 may be used to validate messages sent from a user device 130 to an IoT device 102. Database 140 may further be used by the text-based communication platforms 120 to enable auto-completion of a name and/or location (or other identifying information) of an IoT device 102 when a user attempts to send a message to the IoT device 102.

As will be described in greater detail below, the present disclosure provides a communication system enabling machine to human communication as well as machine to machine communication that enables human-readable communication with and between IoT devices 102. The communication system can be implemented in any existing text-based communication platform 120 (e.g., social media platforms or messaging service 122, text messaging services 124, email platforms 126, etc.) or a dedicated text-based communication platform. Using the communication system of the present disclosure, messages are sent from a user device 130 via a text-based platform 120 (e.g., social media 122, email 126, SMS or other messaging applications 124, etc.) to the IoT device 102. These messages are analyzed by the IoT device 102 or an intermediate computing device 104 for one or more notational identifiers or designators and corresponding words or strings of the communication system (described in greater detail below) to determine one or more commands to be executed by the IoT device 102. Based on the contents of this message, the IoT device 102 can respond appropriately (e.g., read a value, set a rule, monitor a condition, trigger an action, etc.) using the communication system of the present disclosure.

In accordance with the communication system of the present disclosure, the text-based messages sent to IoT devices 102 from user device 130 include one or more notational identifiers and one or more predetermined words or strings. In one embodiment, each notational identifier identifies words or strings following or preceding the notational identifier as being associated with the notational identifier, as will be described in greater detail below. The combination of notational identifiers and accompanying predetermined words or strings of the communication system enables device 102 or an intermediate device 104 to identify and execute at least one command associated with the message.

The notational identifiers and predetermined words or strings of the communication system of the present disclosure may be organized in one or more look-up tables that are stored by one or more of IoT devices 102, intermediate device 104, and/or database 140 to enable parsing and analysis of messages sent to IoT devices 102 from a user device 130.

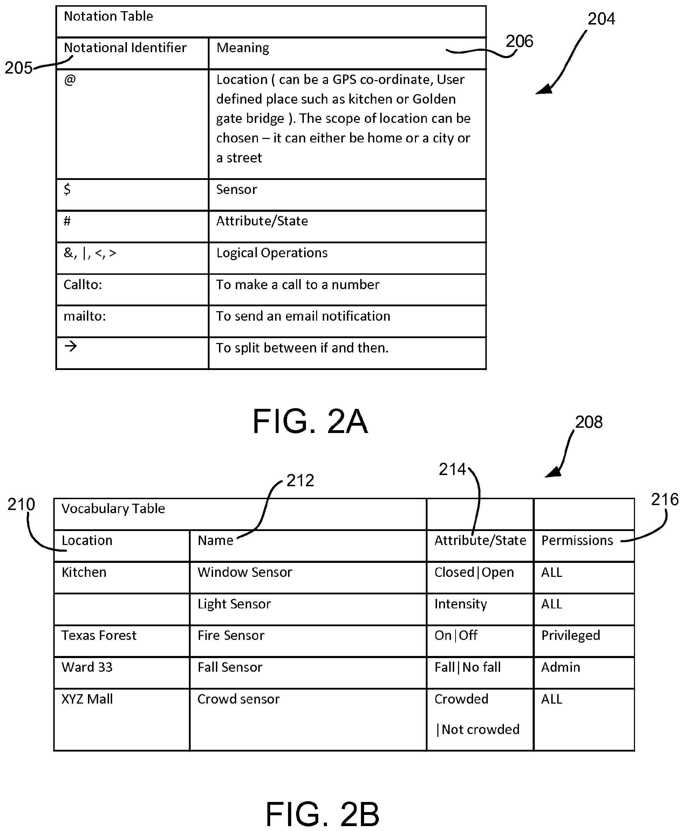

For example, referring to FIG. 2A, a notation table 204 including a plurality of notational identifiers of the presently described communication system is shown in accordance with the present disclosure. The notation table 204 includes several notational identifiers 205 (e.g., @, $, #, &, |, <, >, callto:, mailto:, →, shown in FIG. 2A). Each notational identifier 205 is associated with a means 206 for identifying and/or controlling an IoT device 102 in environment 100. Some of the notational identifiers in table 204 may be paired with corresponding words or strings of the communication system of the present disclosure to enable human-readable communication with an IoT device 102.

Referring to FIG. 2B, a vocabulary table 208 including a plurality of predetermined words or strings of the presently described communication system is shown in accordance with the present disclosure. In one embodiment, table 208 includes one or more words or strings associated with each IoT device 102 in an IoT environment 100. Each IoT device 102 includes an entry in table 208, where each entry includes words or strings identifying the location 210 of an IoT device 102, the name 212 of the IoT device 102, one or more states or attributes 214 of the IoT device 102, and permissions or privileges 216 associated with the IoT device 102.

It is to be appreciated that the notational identifiers in table 204 and words or strings in table 208 are merely exemplary and other notational identifiers and words/strings may be chosen in accordance with the present disclosure. Furthermore, it is to be appreciated that, in some embodiments, the notational identifiers and/or words/strings may be selected and/or changed as desired by a user.

As stated above, the notational identifiers of table 204 and words or strings of table 208 may be combined or paired with corresponding words or strings to produce a text-based message that is understandable by an IoT device 102 configured to use the communication system of the present disclosure. For example, in one embodiment, a first notational identifier (e.g., @), is associated with a location of an IoT device 102 within an IoT environment 100. The location of the IoT device 102 may be a GPS coordinate, a user defined place (e.g., kitchen, living room, etc.), or a public place (e.g., Golden Gate Bridge). The first notational identifier may be included in a text-based message accompanied by a corresponding word or string associated with the location of an IoT device 102. When the first notational identifier is followed by one or more words or strings, the first notational identifier identifies the words or strings that follow the first notational identifier as being associated with the location of an IoT device 102. For example, the text-based message may include "@ Kitchen" to identify that the message is addressed to an IoT device 102 located in a kitchen of a user's home.

A second notational identifier (e.g., $) is associated with a name of an IoT device 102. The second notational identifier may be included in a text-based message accompanied by a corresponding word or string associated with the name of an IoT device 102 (e.g., Window Sensor). When the second notational identifier is followed by one or more words or strings, the second notational identifier identifies the words or strings that follow the second notational identifier as being associated with the name of an IoT device 102. For example, the text-based message may include "$ Window Sensor" to identify that the message is addressed to an IoT device 102 named Window sensor.

The first and second notational identifiers and the words or strings accompanying them in a text-based message serve to uniquely identify an IoT device 102 within an IoT environment 100. This identifying information within the text-based message is used to send the text-based message from a user device 130 to an IoT device 102. Referring to FIG. 1, a user may send a text-based message to an IoT device 102 via one of text-based communication platforms 120. In one embodiment, tables 204, 208 are stored in database 140, such that, the identifying information (i.e., the first and second notational identifiers and the accompanying words or strings for each) in the text-based message may be used by a text-based communication platform 120 by querying tables 204, 208 to determine which IoT device 102 to send the text-based message to. For example, if a text-based message including "@ Kitchen $ Window Sensor" is sent from a user device 130 via text-based communication platform 120, the text-based communication platform 120 is configured to check table 208 in database 140 for an IoT device 102 located in the kitchen and named window sensor. The table 208 may include a unique IP address or other identifying information that the text-based communication platform 120 may use to send the message to the appropriate IoT device (i.e., the window sensor in the kitchen).

As another example, each IoT device 102 may include a social media name, such as, a Twitter™ handle, a Facebook™ user name, etc., that is stored in table 208 and used to communicate with the IoT device 102 via a post (e.g., a tweet, if Twitter™ is being used, or a Facebook™ post, if Facebook™ is being used) on the social media website or a direct message on the social media website. In this way, using the communication system of the present disclosure, a human can directly interact and/or communicate with an IoT device 102 in the same way the human would interact with other humans, e.g., in the example above, by tweeting the IoT device 102.

Tables 204, 208 stored in database 140 may also be used by the text-based communication platform 120 to support searching and auto-complete features as a user attempts to write or send a message to an IoT device 102.

Referring again to FIGS. 2A and 2B, in addition to identifying information (i.e., the first and second notational identifiers and the accompanying words or strings for each), a text-based message sent from a user device 130 to an IoT device 102 includes several notational identifiers and words or strings of the communication system of the present disclosure that enable the IoT device 102 to be controlled, accessed or read by a user.

Table 204 includes a third notational identifier (e.g., #) that is associated with an attribute of an IoT device 102. For example, where the IoT device 102 is a window sensor, the attribute may include whether the window sensor is currently sensing that the window is open or closed (e.g., a binary attribute). Where the IoT device 102 is a light sensor, the attribute may be the intensity currently sensed by the light sensor (e.g., an attribute with multiple possible values or states). The third notational identifier may be accompanied by a corresponding word or string associated with the attribute of an IoT device 102. When the third notational identifier is followed by one or more words or strings, the third notational identifier identifies the words or strings that follow the third notational identifier as being associated with the name of an IoT device 102. For example, the text-based message may include "@ Kitchen $ Window Sensor # Closed" to represent a rule or condition where the window sensor located in the kitchen is currently sensing that the window in the kitchen is closed.

Table 204 includes a fourth notational identifier (e.g., →) that is associated with an action or condition (e.g., an if/then statement or relationship) to be implemented by an IoT device 102. The fourth notational identifier represents an if/then relationship between the notational identifiers and words/strings preceding the fourth notational identifier and the notational identifiers and words/strings following the fourth notational identifier. In this way, using the communication system of the present disclosure, a user may send a text-based message for an IoT device 102 to perform an action when a condition is triggered. As an example, the text-based message may include "@ Kitchen $ Window Sensor # Closed → @ Kitchen $ Light # On" to represent the if/then rule: if the kitchen window sensor senses the window is closed, then turn on the kitchen light. As shown by this example, the notational identifiers and strings preceding the fourth notational identifier (e.g., →) represent a condition and the notational identifiers and strings following the fourth notational identifier represent an action to be executed if the condition is triggered. In this example, after receiving the text-based message including "@ Kitchen $ Window Sensor # Closed → @ Kitchen $ Light # On", the window sensor in the kitchen is configured to monitor the condition (i.e., if the kitchen window is closed) and execute the action (i.e., cause the kitchen light to be turned on) if the condition is triggered.

As the above example shows, in executing an action or command received in a text-based message received from a user device 130, the IoT device 102 may be configured to send alerts and/or signals to other IoT devices (e.g., the kitchen window sensor in the above example may send a signal to the kitchen light to turn on) for the action or command to be executed when the condition is triggered. It is to be appreciated that these alerts and/or signals to other IoT devices 102 may also be sent using the communication system of the presented disclosure (i.e., implementing the notational identifiers and strings of tables 204 and 208). It is also to be appreciated that the action or command to be executed may involve sending an alert or message to a user device 130 (e.g., to the user device 130 having sent the original text-based message or to another user device 130).

Table 204 may include additional notational identifiers that expand the possibilities and the types of commands a user may issue to an IoT device 102 via a text-based message using the communication system of the present disclosure. For example, table 204 may include notational identifiers associated with specific actions to be performed by an IoT device 102 (e.g., if a condition is triggered). For example, table 204 includes notational identifier "callto:", where the "callto:" notational identifier represents a phone call to be placed to a phone number following the "callto:" notational identifier. Table 204 includes notational identifier "mailto:", where the "mailto:" notational identifier represents an email to be sent to an email address following the "mailto:" notational identifier. The "callto:" and "mailto:" notational identifiers may be included as part of an action to be executed if a condition is triggered in the text-based message. In one embodiment, when the "callto:" notational identifier is used in an action, the IoT device 102 executing the action is configured to generate a voice message associated with the action to be played when the phone call is placed to the desired phone number by IoT device 102. For example, the voice message may be a reading of an attribute or an alert that an event has been triggered. In another embodiment, when the "mailto:" notational identifier is used in an action, the IoT device 102 executing the action is configured to generate a text-based message associated with the action to be included in the email.

It is to be appreciated that other notational identifiers for posting to or communicating through social media (e.g., tweeting a message on a feed) may also be included in table 204 and implemented in the communication system of the present disclosure.

As another example, table 204 also includes notational identifiers associated with logical operations (e.g., &, I, <, >), where the notational identifier "&" is associated with an "and" operation, the notational identifier "|" is associated with an "or" operation, the notational identifier "<" is associated with a "less than" operation, and the notational identifier ">" is associated with a "greater than" operation. Using the "&" and "|" notational identifiers, multiple conditions may be checked for and multiple actions may be performed by an IoT device in response to a single text-based message. Furthermore, using the "<" and ">" notations identifiers, less than/greater than conditions may be tested in relation to a state or attribute of an IoT device 102. For example, using the "<" and ">" notational identifiers, conditions may be tested as to whether a state or attribute of an IoT device 102 is above or below a predetermined threshold, and actions may be triggered (e.g. send a notification to a device, trigger an alarm, etc.) if the condition is found to be true.

For example, a text-based message including "@ Ward33 $ Fall Sensor # On → @ Admin Desk $ Alarm # On & callto:phonenumber" represents a command to be executed by a fall sensor located in a ward of a hospital. The command includes sending a signal to activate an alarm sensor located at an admin desk (e.g., by toggling the state or attribute of the alarm to be "on") and placing a call to a phone number if the fall sensor's senses a patient fall (e.g., if the attribute or state of the fall sensor is currently equal to "Fall"). As described above, a voice message associated with the action executed may be generated by IoT device 102 and played during the phone call. In the example described above, the generated voice message may describe that a fall has been sensed in the ward of the hospital and that assistance is needed.

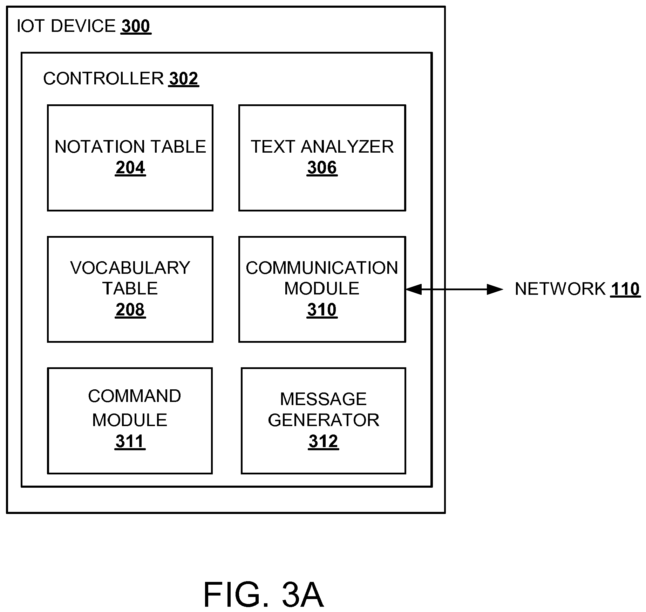

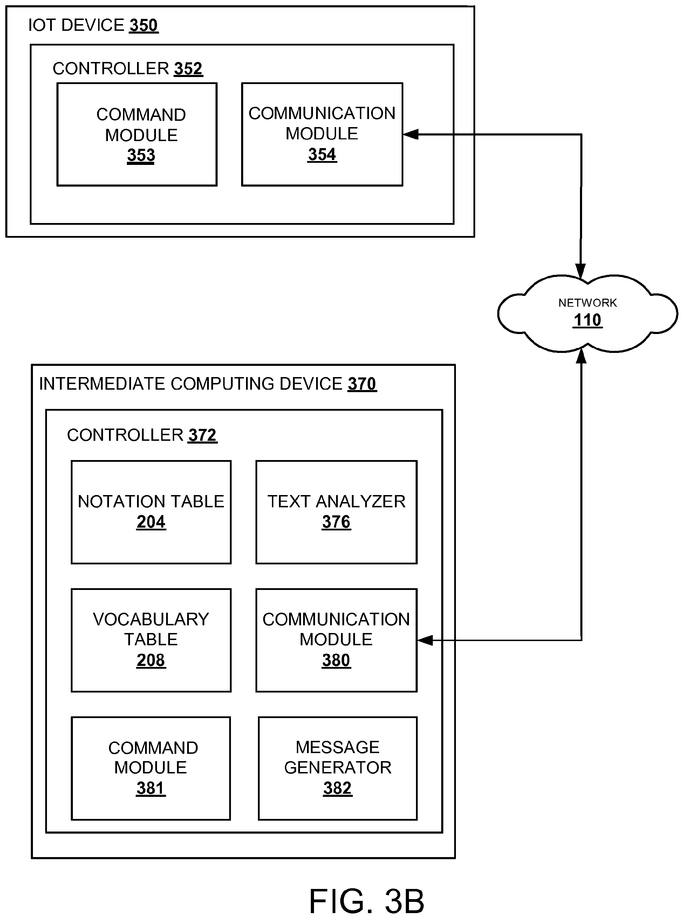

Referring to FIG. 3, an exemplary IoT device 300 is shown in accordance with the present disclosure. It is to be appreciated that device 300 may be any of IoT devices 102 and/or intermediate computing device 104 coupled to network 110.

IoT device 300 includes a controller 302. Controller 302 includes text analyzer 306, communication module 310, command module 311, and message generator 312. It is to be appreciated that, in some embodiments, controller 302 may also include notation table 204 and vocabulary table 208. In other embodiments, IoT device 300 may be configured to access tables 204, 208 via another device (e.g., intermediate device 104) or server (e.g., database 140) coupled to network 110.

The communication module 310 is configured for communication with other network-connected devices (e.g., other IoT devices 102, user computing devices 130, and/or intermediate computing devices 104). Communication module 310 may be configured for wireless and/or wired communication using any now known, or later developed, communication protocol and network, such as, network 110.

The communication module 310 is configured to receive a text-based message from a user device 130, e.g., via network 110. The text-based message includes one or more notational identifiers and accompanying strings included in tables 204 and 208. The received message is provided to text analyzer 306, where text analyzer 306 is configured to extract the text from the text-based message and analyze the text to determine at least one command (e.g., a rule and/or action) to be executed by the device 300.

A message (including the requisite notation and vocabulary of the communication system of the present disclosure) is received from a user's device 130 (e.g., a smart phone) by the communication module 310 of the IoT device 300. The text analyzer 306 analyzes the text of the received message and looks up the notational identifiers and words or strings that are in the vocabulary and notation tables 204, 208 to determine what command (e.g., a rule/action/reading) is associated with the message and the command is then executed by controller 302.

If a message (e.g., confirming receipt, responding to a reading request of an attribute of the IoT device, or issuing a notification) is required, a message generator 312 generates a message and the message is sent to the user's device 130 via the communication module 210.

Any commands received in a text-based message that require monitoring a condition (e.g., send an alert if an attribute, such as, temperature, is above a predetermined threshold value) to be triggered may be saved in monitoring or command module 311. Command module 311 is configured to store one or more commands and monitor any necessary attributes associated with the conditions of each command to determine if a condition has been triggered. If a condition has been triggered, command module 311 is configured to execute the required action (e.g., sending a notification, setting off an alarm, etc.).

It is to be appreciated that controller 302 is configured to determine if the device 300 has the requisite permissions to execute a command associated with a received text-based message based on the user sending the message. In one embodiment, a list of users and each user's permissions for each IoT device 102 is stored in vocabulary table 208 that may be checked by controller 302 to determine if the requisite permissions are met to execute a command based on the user sending the message and requesting the command.

It is to be appreciated that the controller 302 of the present disclosure may be implemented in hardware, software, firmware, or any combinations thereof. In some embodiments, the controller 302 may be implemented in software or firmware that is stored on a memory device (e.g., a memory device) and that is executable by a suitable instruction execution system (e.g., a processing device). In some embodiments, the various modules (e.g., module 306, 310, 311, 312) may be implemented in hardware using, for example, discrete logic circuitry, an application specific integrated circuit (ASIC), a programmable gate array (PGA), a field programmable gate array (FPGA), or any combinations thereof.

In one embodiment, (instead of each IoT device 102 including the tables 204, 208) tables 204, 208 may be maintained in a cloud-based database.

As stated above, where the IoT device 102 lacks the processing and/or communication capabilities to implement one or more of modules of IoT device 300, an intermediate computing device 104 may include each of the modules of IoT device 300 and be used to facilitate communication between IoT devices 102 and other IoT devices 102 and/or user computing devices 130.

For example, referring to FIG. 3B, block diagrams of an IoT device 350 and an intermediate computing device 370 are shown in accordance with the present disclosure. IoT device 350 is an exemplary IoT device that lacks the processing and communication capabilities to implement all of the modules of IoT device 300. In this embodiment, IoT device 350 includes a controller 352, where controller 352 includes command module 353 and communication module 354. It is to be appreciated that command module 353 is configured to perform at least the same tasks as command module 311 and communication module 354 is configured to perform at least the same tasks as communication module 310, described above.

IoT device 350 is in communication with intermediate computing device 370 via network 110. Intermediate computing device 370 includes a controller 372, where controller 372 includes notation tables 204, vocabulary table 208, text analyzer 376, communication module 380, command module 381, and message generator or translator module 382. It is to be appreciated that modules 376, 380, 381, and 382, are configured to perform at least the same tasks as modules 306, 310, 311, 312, respectively, which are described above.

Since IoT device 350 lacks the processing and communication capabilities of IoT device 300, intermediate computing device 370 is configured to facilitate communication between IoT device 350 and one or more user devices 130 in accordance with the communication system of the present disclosure. Intermediate computing device 370 is configured to receive a text-based message sent from a user device 130 and addressed (i.e., using the identifying information described above) to IoT device 350. Intermediate computing device 370 then uses text analyzer 376, notation table 204, and vocabulary table 208 to determine at least one command to be executed by IoT device 350. It is to be appreciated that text analyzer 376 is configured to check any requisite permissions associated with the command, as described above. Message generator or translator module 382 is then configured to translate the at least one command into a format (i.e., syntax or language) that is understandable by IoT device 350. Then, based on the identifying information in the text-based message (e.g., @ Kitchen $ Window Sensor), communication module 380 sends the at least one translated command to IoT device 350 via network 110. In one embodiment, communication module 380 uses the identifying information associated with IoT device 350 to determine an address (e.g., IP address) that may be used to send the message to IoT device 350.

The at least one translated command is received by communication module 354 of IoT device 350 and controller 352 executes the at least one translated command. If the command requires sending a response (e.g., a reading of an attribute, an alert, etc.), controller 353 is configured to send the response to intermediate computing device 370 via communication module 354. Text analyzer 376 is then configured to translate the response into a human-readable format (e.g., in English or another human-readable language). The translated response is then sent to the intended device (e.g., the user device 130 having sent the original text-based message, another IoT device, etc.) via communication module 380.

It is to be appreciated that where one or more commands received by IoT device 350 require monitoring one or more attributes to determine if a condition is triggered, command module 353 of IoT device 350 may be configured to monitor the attributes required by the commands received by IoT device 350. If command module 353 determines that a condition is triggered based on a monitored attribute, an appropriate response (in a human-readable format, as described above) is sent by controller 352 to intermediate computing device 370 to be sent to an intended device.

In some embodiments, IoT device 350 may lack the processing capabilities to implement command module 353. In this case, command module 381 of intermediate computing device 370 is configured to monitor the one or more attributes of IoT device 350 associated with a condition of a command. The command module 381 may be configured to periodically check the one or more attributes of IoT device 350 to determine if a condition has been triggered. If command module 381 determines that a condition is triggered based on a monitored attribute of IoT device 350, an appropriate response is generated by message generator 382 and sent by communication module 380 to an intended device.

It is to be appreciated that, in some embodiments, intermediate computing device 370 is used with IoT devices that include the processing capabilities to analyze and determine at least one command based on a received text-based message, but only lack the communication capabilities to receive the text-based message from the text-based communication platform 120 used by the user device 130 to send the text-based message. For example, an IoT device may lack the communication capabilities to send and receive emails, social media messages, and/or other types of messages. In this case, intermediate computing device 370 may merely be used to receive messages for, and send message from, the IoT device lacking the communication capabilities. In this way, intermediate computing device 370 lends its communication capabilities to an IoT device that lacks the requisite communication capabilities to implement the communication system of the present disclosure.

In some embodiments, intermediate computing devices 104, 370 may be configured to implement security services, such as, but not limited to, implementing firewalls, blocking rogue senders of messages, and providing access control to protect IoT devices 102, 300, 370 from potentially harmful attacks and breaches.

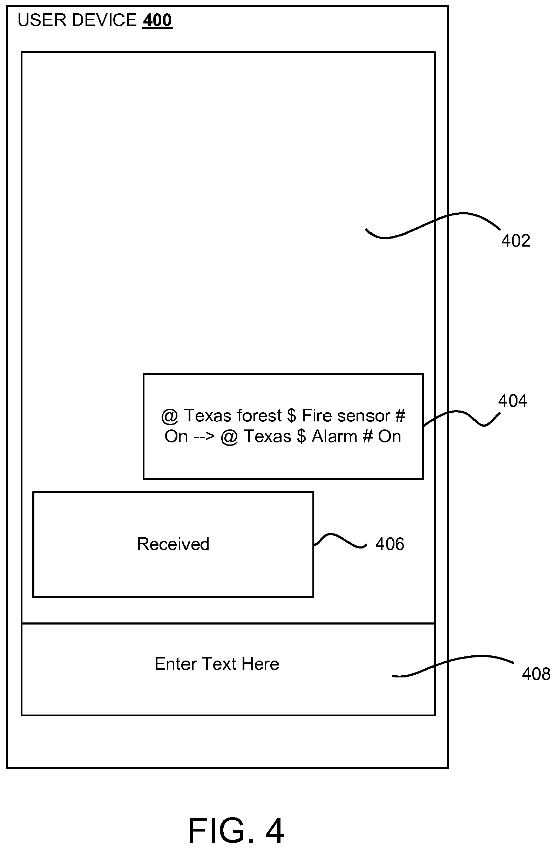

As described above, the communication system of the present disclosure may be implemented in any text-based communication platform. For example, using a text-messaging service of a phone or other computing device 130. Referring to FIG. 4, an exemplary user computing device 400 is shown in accordance with an embodiment of the present disclosure. Device 400 includes a touch display 402, displaying a text-based user interface, with an input portion 408 (e.g., using a touch-based keyboard of a smart phone for input).

As shown in FIG. 4, a first message 404, including text with notational identifiers and accompanying strings from tables 204, 208 may be sent to an IoT device 102/300/350 to cause IoT device 102/300/350 to execute at least one command (e.g., to request information from the IoT device 102/300/350 regarding an attribute, set a condition/rule and an action to be triggered when the condition/rule is satisfied, send an alert to another device, etc.) The IoT Device 102/300/350 may, if necessary respond (in some embodiments, with the help of intermediate device 104/370), with a message 406. The message 406 may include confirmation of receipt of message 404, a response to requested information, an error message, etc.

It is to be appreciated that, in some embodiments, user device 130, 400 may include a dedicated user interface for communication with other IoT devices 102, 300, 350. The dedicated user interface may be configured to enforce valid usage, e.g., valid syntax, of the notational identifiers and strings in tables 204, 208 to ensure a valid message including a valid command is included in a text-based message. For example, the dedicated user interface may periodically scan a text-based message as it is being inputted by a user into the dedicated user interface to identify notational identifiers that the dedicated user interface recognizes as being in table 204. If a notational identifier is recognized as being in table 204, the dedicated user interface is configured to determine if the accompanying string for the notational identifier included is valid (i.e., if the accompanying string is a string in table 208 that is in the column associated with the notational identifier). If the dedicated user interface senses either the notational identifier or accompanying string is invalid (i.e., not in any of tables 204, 208 or is a mismatch of notational identifiers with improper strings), the dedicated user interface may alert the user or not allow the user to send the message.

In another embodiment, after the dedicated text-based user interface detects a valid notational identifier, the dedicated text-based user interface may monitor each character or string of characters of the string accompanying the valid notational identifier entered by the user and query table 208 to suggest auto-completions for matching strings associated with the detected valid notational identifier.

In some embodiments, to reduce the computational load on the user interface in providing the auto-completion feature, the user interface may be configured to filter the pool of searched notational identifiers in table 204 and strings in table 208 using one or more search criteria. For example, the search criteria may include searching for notational identifiers and strings in tables 204, 208 associated only with IoT devices that the user has registered with or saved in a contact list of IoT devices the user intends to, or previously has, communicated with. For example, a user may have registered with IoT devices in the user's home network which may be considered private devices, i.e., devices that are not available to be accessed by the general public. In one embodiment, when the user inputs the @ or $ notational identifiers, the dedicated text-based user interface is configured to only provide auto-completion suggestions for strings associated with names and locations of IoT devices that are in the user's registration or contact list when the user attempts to input the accompanying strings associated with each of notational identifiers @ and $. After the notational identifiers and strings associated with the name and location of an IoT device is inputted, if the notational identifier associated with an attribute of an IoT device (e.g., #) is inputted, the dedicated text-based user interface is configured to only search for and provide auto-completion suggestions for attributes associated with the IoT device identified by the name and location notational identifiers and accompanying strings inputted by the user. The user registration or contact list may be stored in a memory of the device implementing the dedicated text-based user interface and/or database 140.

As another example, the search criteria may include searching for notational identifiers and strings in tables 204, 208 that are compatible with the permissions afforded to the user in relation to a given IoT device. For example, auto-completion suggestions for the location, name, or attribute strings in table 208 may only be provided by the dedicated text-based user interface for IoT devices that the user has the proper permissions for.

It is to be appreciated that any of the auto-completion features described above in relation to the dedicated text-based user interface of the present disclosure may also be implemented in existing text-based communication platforms 120.

In one embodiment, where a text-based user interface (whether it is a dedicated text-based user interface, as described above, or a text-based user interface of an existing communication platform 120) is used by a user to communicate with both humans and IoT devices, an additional notational identifier (e.g., "!") may be included in table 204 and included by a user in a message to identify that the text-based message (and the contents of the message) is intended for an IoT device and not a human. In this way, when the additional notational identifier (e.g., "!") is included in a text-based message, the text-based user interface used by the user is configured to only search for and provide for auto-completion suggestions related to IoT devices. The selection of "!" as the additional notational identifier aids the user in remembering the additional notational identifier, since "!" is an inverted "i", which may a useful mnemonic association for the additional notational identifier "!" as being associated with a search or message for an IoT device.

The additional notational identifier (e.g., "!") of this embodiment may also be used by text-based user interfaces of communication platforms 120, such as, social media platforms 122, to reduce the pool of accounts searched in providing auto-completion features to only accounts that are registered as IoT devices when a user searches for account names of IoT devices. For example, if Twitter™ is used as a text-based user interface by a user to communicate with an IoT device and a user inputs "! " at the beginning of a message or search query inputted in the text-based user interface of Twitter™ (where "!" is the additional notational identifier in this embodiment), for any additional character inputs by the user, the text-based user interface of Twitter™ is configured to search database 140 and only provide auto-completion suggestions related to accounts of Twitter™ that are registered as IoT devices. In this way, when a user searches for an IoT device on a communication platform 120, such as, a social media platform 122, when the additional identifier (e.g., "!") is included at the beginning of the search or message, only accounts registered as IoT devices are returned as auto-completion suggestions. This reduces the computational load of also searching accounts registered to humans.

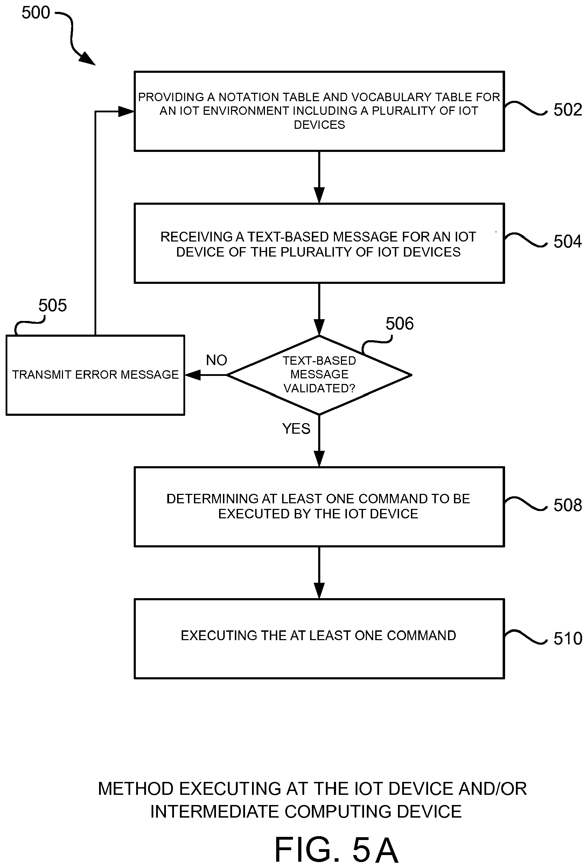

Referring to FIG. 5A, a method 500 for determining at least one command using the above described communication system is shown in accordance with the present disclosure. It is to be appreciated that method 500 may be implemented in any of the IoT devices 102, 300 and/or 350, described above.

In step 502, a notation table and a vocabulary table is provided for an IoT environment including a plurality of IoT devices. For example, as described above, IoT devices 300 may include notation table 204 and vocabulary table 208. In some embodiments, tables 204, 208 may be provided by another device or server in environment 100, such as, intermediate device 104, 370 and/or database 140. Also, it is to be appreciated that in some embodiments, tables 204, 208 may be included in a single table.

In step 504, a text-based message is received by an IoT device, such as, devices 102, 300, from a text-based communication platform 120. For example, the text-based message may be received via communication module 310 by controller 302 of IoT device 300. In step 506, text analyzer 306 of device 300 attempts to validate the text-based message. As described above, a text analyzer 306 of IoT device 300 may validate the message by determining if the notational identifiers and accompanying strings are included in one of tables 204, 208. If text analyzer 306 determines that the text-based message cannot be validated, in step 506, message generator 312 generates an error message and controller 302 transmits the error message via communication module 310 to the user device 130 that initially sent the text-based message, in step 505. Alternatively, if text analyzer 306 determines the text-based message can be validated, in step 506, text analyzer 306 determines based on the notational identifiers and accompanying strings in the text-based message and tables 204, 206 at least one command to be executed by the IoT device 300, in step 508. As described above, the notational identifiers and accompanying strings in tables 204, 206 may be used by a user to represent one or more commands in a message sent to IoT device 300. The commands may include, but are not limited to, setting a rule, performing or executing one or more actions, receiving a reading of an attribute of IoT device 300 (e.g., the reading of a sensor or a current state of the sensor), etc. In step 510, the determined command is executed by the command module 311 of IoT device 300.

It is to be appreciated that, as described above, where an IoT device does not include the processing and/or communication capabilities to perform some or all of the steps of method 500, steps 502-508 may be performed by an intermediate device 104, 370.

In addition to the steps 502-508 of method 500, the intermediate computing device 104, 370 is configured to identify the IoT device 300 that the text-based message intended for, translate the at least one command associated with the text-based message into a format that is readable by the IoT device 300, and transmit the translated at least one command to the IoT device 300.

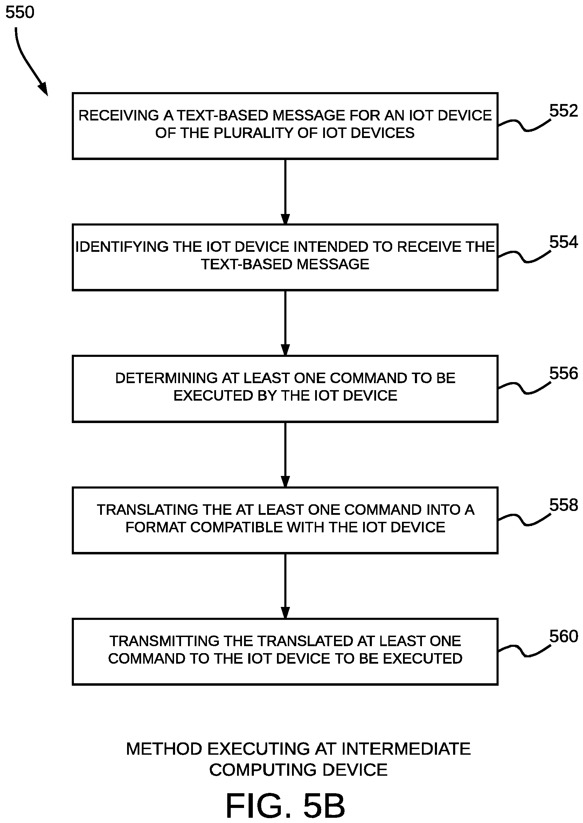

For example, referring to FIG. 5B, a block diagram of a method 550 to be performed by an intermediate computing device 104, 370 is shown in accordance with the present disclosure. In step 552, communication module 380 receives a text-based message intended for an IoT device 102, 300, 350. In step 554, text analyzer 376 analyzes the identifying information included in the text-based message (e.g., @ Device Location $ Sensor Name) in relation to tables 204, 208 to identify the IoT device that is intended to receive the text-based message. In step 556, text analyzer 376 determines the at least one command to be executed by the IoT device 300 based on the notational identifiers and accompanying strings in the text-based message and tables 204, 206. In step 558, message generator 382 translates the at least one command into a format that is compatible with, and readable by, the intended IoT device (e.g., in a syntax or language understandable by the intended IoT device). In step 560, based on the identifying information in the text-based message, communication module 310 transmits the translated at least one command to the intended IoT device to be executed.

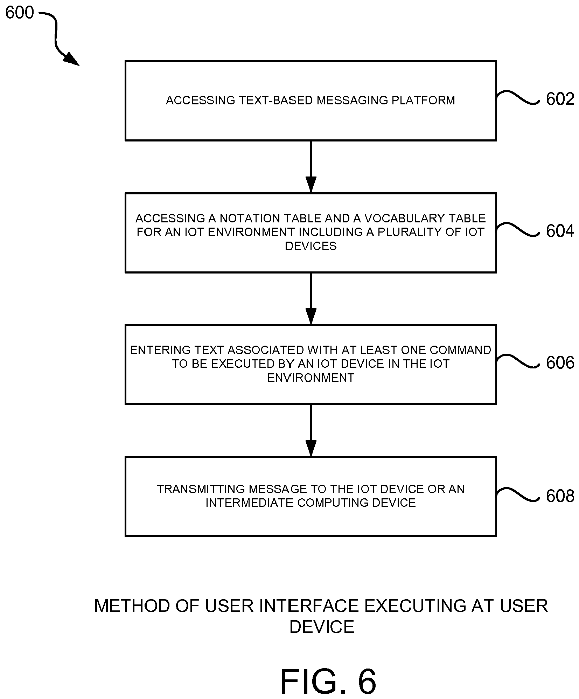

Referring to FIG. 6, a method 600 for providing a text-based user interface to communicate with an IoT device in an IoT environment is shown in accordance with the present disclosure. It is to be appreciated that method 600 may be implemented in any user device, such as user device 130, configured with a text-based interface for use with a text-based message platform 120.

In step 602, the user device 130 accesses a text-based messaging platform 120, such as, a social media platform (e.g., Twitter™), an SMS platform, an email platform, or any other text-based messaging platform. In step 604, the user device 130 accesses tables 204, 208 via database 140. These tables may be presented to the user by the user device 130 on a display of the user device 130 to enable the user to read the tables 204, 208. In step 606, the user enters the necessary notational identifiers and accompanying strings to generate a message associated with at least one command to be executed by an IoT device 102, 300, 350. As stated above, the user interface of the device 130 may be configured to query tables 204, 208 in database 140 to provide auto-completion functionality to a user as a user enters notational identifiers and accompanying strings and to validate the entered message (e.g., to ensure valid notational identifier, strings, and combinations thereof are used based on tables 204, 208). In step 608, the text-based messaging platform 120 being used by the user device 130 transmits the message to the IoT device 102, 300, 350 identified by the identifying information (e.g., @ Sensor Location $ Sensor Name) or to an intermediate computing device 104 (e.g., a gateway).

The communication system of the present disclosure enables a user to communicate in a human-readable format with any IoT device using text-based messages using any type of text-based platform. This provides a uniform means and experience for users to communicate and control IoT devices across any number of service providers. Furthermore, the communication system of the present disclosure provides uniform access to local, remote, and/or public IoT devices. This enables unique services involving IoT devices, such as, subscribing for alerts/notification from public or private sensors. For example, a user living in an area prone to tsunamis or other natural disasters may register or subscribe for alerts/notifications from a public IoT device configured to detect an upcoming tsunami (e.g., a tsunami sensor) for the area the user lives in. The user may register or subscribe for alerts/notification from the public IoT device by sending a text-based message to the public IoT device including the notational identifiers and strings of the communication system of the present disclosure.

According to one aspect of the present disclosure, a method is provided including providing at least one table for an Internet of Things (IoT) environment including a plurality of IoT devices, the at least one table defining notational identifiers and strings to control the plurality of IoT devices; receiving a text-based message, the text-based message including at least a first notational identifier, a first string, a second notational identifier, and a second string, the first notational identifier identifying the first string as being associated with at least one attribute of at least one IoT device of the plurality of IoT devices, the second notational identifier identifying the second string as being associated with at least one command to be executed based on the at least one attribute of the at least one IoT device; determining the at least one command to be executed by the at least one IoT device based on the first notational identifier, the first string, the second notational identifier, the second string, and the at least one table; and executing the at least one command.

In one aspect, the text-based message further includes identifying information associated with the at least one IoT device.

In another aspect, the identifying information includes a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

In a further aspect, the method is performed by the at least one IoT device.

In another aspect of the method, the text-based message is received from at least one of a text-messaging service, a social media messaging service, or an email service.

In still another aspect, the text-based message is received from an intermediate computing device.

In one aspect of the method, the executing includes setting a rule including a condition and an action to be executed if the condition is triggered.

In another aspect of the method, the executing further includes monitoring the at least one attribute to determine if the condition has been triggered and, if the condition has been triggered, executing the action.

In a further aspect of the method, the condition is whether a value associated with the attribute is above or below a threshold value and the action is transmitting an alert to at least one second device if the value is above or below the threshold value.

In another aspect, the at least one command is to read a value associated with the attribute and transmit the value to at least one second device.

In yet another aspect, the text-based message includes a third notational identifier representing at least one operator.

In still another aspect of the method, the at least one table is stored in a memory of the at least one IoT device.

In a further aspect, the at least one table is stored in a memory of a second device.

In another aspect, the text-based message includes a third notational identifier identifying the text-based message as being intended for at least one of the plurality of IoT devices.

According to another aspect of the present disclosure, an Internet of Things (IoT) device includes a communication module configured to receive a text-based message, the text-based message including at least a first notational identifier, a first string, a second notational identifier, and a second string, the first notational identifier identifying the first string as being associated with at least one attribute of the IoT device, the second notational identifier identifying the second string as being associated with at least one command to be executed based on the at least one attribute of the IoT device; a text analyzer configured to determine the at least one command to be executed by the IoT device based on the first notational identifier, the first string, the second notational identifier, the second string, and at least one table, the at least one table defining notational identifiers and strings to control a plurality of IoT devices in an IoT environment; and a command module configured to execute the at least one command.

In one aspect, the text-based message further includes identifying information associated with the IoT device.

In further aspect, the identifying information includes a third notational identifier, a third string, a fourth notational identifier, and a fourth string, the third notational identifier identifying the third string as being associated with a location of the IoT device and the fourth notational identifier identifying the fourth string as being associated with a name of the IoT device.

In another aspect, the text-based message is received from at least one of a text-messaging service, a social media messaging service, or an email service.

In yet another aspect, the text-based message is received from an intermediate computing device.

In a further aspect of the IoT device, the command module is configured to execute the at least one command by setting a rule including a condition and an action to be executed if the condition is triggered.

In still another aspect, the command module is further configured to execute the at least one command by monitoring the at least one attribute to determine if the condition has been triggered and, if the condition has been triggered, execute the action.

In one aspect, the condition is whether a value associated with the attribute is above or below a threshold value and the action is transmitting an alert to at least one second device if the value is above or below the threshold value.

In a further aspect, the at least one command is to read a value associated with the attribute and transmit the value to at least one second device.

In another aspect, the text-based message includes a third notational identifier representing at least one operator.

In still a further aspect, the at least one table is stored in a memory of the IoT device.

In yet another aspect, the at least one table is stored in a memory of a second device.

In another aspect, the text-based message includes a third notational identifier identifying the text-based message as being intended for at least one of the plurality of IoT devices.

According to a further aspect of the present disclosure, a method is provided including receiving a text-based message, the text-based message including at least a first notational identifier, a first string, a second notational identifier, and a second string, the first notational identifier identifying the first string as being associated with at least one attribute of at least one Internet of Things (IoT) device of a plurality of IoT devices in an IoT environment, the second notational identifier identifying the second string as being associated with at least one command to be executed based on the at least one attribute of the at least one IoT device; determining the at least one command to be executed by the at least one IoT device based on the first notational identifier, the first string, the second notational identifier, the second string, and at least one table, the at least one table defining notational identifiers and strings to control the plurality of IoT devices; translating the at least one command to a format compatible with the at least one IoT device, and transmitting the at least one translated command to the at least one IoT device.

In one aspect, the text-based message further includes identifying information associated with the at least one IoT device and the method further includes identifying, based on the identifying information, the at least one IoT device intended to receive the text-based message.

In another aspect, the identifying information includes a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

According to yet another aspect of the present disclosure, an apparatus includes a communication module configured to receive a text-based message, the text-based message including at least a first notational identifier, a first string, a second notational identifier, and a second string, the first notational identifier identifying the first string as being associated with at least one attribute of at least one Internet of Things (IoT) device of a plurality of IoT devices in an IoT environment, the second notational identifier identifying the second string as being associated with at least one command to be executed based on the at least one attribute of the at least one IoT device; a text analyzer configured to determine the at least one command to be executed by the at least one IoT device based on the first notational identifier, the first string, the second notational identifier, the second string, and at least one table, the at least one table defining notational identifiers and strings to control the plurality of IoT devices; and a message generator configured to translate the at least one command to a format compatible with the at least one IoT device, wherein the communication module is further configured to transmit the at least one translated command to the at least one IoT device.

In one aspect of the apparatus, the text-based message further includes identifying information associated with the at least one IoT device and the text analyzer is configured to identify, based on the identifying information, the at least one IoT device intended to receive the text-based message.

In another aspect, the identifying information includes a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

It is to be appreciated that the various features shown and described are interchangeable, that is a feature shown in one embodiment may be incorporated into another embodiment.

Although embodiments which incorporate the teachings of the present disclosure have been shown and described in detail herein, those skilled in the art can readily devise many other varied embodiments that still incorporate these teachings. Having described embodiments of devices, systems, and methods for communication in an IoT environment, it is noted that modifications and variations can be made by persons skilled in the art in light of the above teachings. It is therefore to be understood that changes may be made in the particular embodiments of the disclosure disclosed which are within the scope of the disclosure as outlined by the appended claims.

## Claims

1. A method comprising:
providing (502) at least one table for an Internet of Things (IoT) environment including a plurality of IoT devices, the at least one table defining notational identifiers and strings to control the plurality of IoT devices;
receiving (504) a text-based message, the text-based message including at least a first notational identifier, a first string, a second notational identifier, and a second string, the first notational identifier identifying the first string as being associated with at least one attribute of at least one IoT device of the plurality of IoT devices, the second notational identifier identifying the second string as being associated with at least one command to be executed based on the at least one attribute of the at least one IoT device;
determining (508) the at least one command to be executed by the at least one IoT device based on the first notational identifier, the first string, the second notational identifier, the second string, and the at least one table; and
executing (510) the at least one command.

2. The method (500) of claim 1, wherein the text-based message further includes identifying information associated with the at least one IoT device.

3. The method (500) of claim 2, wherein the identifying information includes a third notational identifier, a third string, a fourth notational identifier, and a fourth string, the third notational identifier identifying the third string as being associated with a location of the at least one IoT device and the fourth notational identifier identifying the fourth string as being associated with a name of the at least one IoT device.

4. The method (500) of any of the preceding claims, wherein the executing (510) includes setting a rule including a condition and an action to be executed if the condition is triggered.

5. The method (500) of claim 4, wherein the executing (510) further includes monitoring the at least one attribute to determine if the condition has been triggered and, if the condition has been triggered, executing the action.

6. The method (500) of claim 5, wherein the condition is whether a value associated with the attribute is above or below a threshold value and the action is transmitting an alert to at least one second device if the value is above or below the threshold value.

7. The method (500) of claims 1 or 2, wherein the text-based message includes a third notational identifier identifying the text-based message as being intended for at least one of the plurality of IoT devices (102, 300, 350).

8. An Internet of Things (IoT) device (102, 300) comprising:
a communication module (310) configured to receive a text-based message, the text-based message including at least a first notational identifier, a first string, a second notational identifier, and a second string, the first notational identifier identifying the first string as being associated with at least one attribute of the aparatus (102, 300), the second notational identifier identifying the second string as being associated with at least one command to be executed based on the at least one attribute of the apparatus (102, 300);
a text analyzer (306) configured to determine the at least one command to be executed by the apparatus (102, 300) based on the first notational identifier, the first string, the second notational identifier, the second string, and at least one table (204, 208), the at least one table (204, 208) defining notational identifiers and strings to control a plurality of IoT devices (102, 300, 350) in an IoT environment (100); and
a command module (311) configured to execute the at least one command.

9. The IoT device of claim 8, wherein the text-based message further includes identifying information associated with the IoT device.

10. The IoT device (102, 300) of claim 9, wherein the identifying information includes a third notational identifier, a third string, a fourth notational identifier, and a fourth string, the third notational identifier identifying the third string as being associated with a location of the IoT device (102, 300) and the fourth notational identifier identifying the fourth string as being associated with a name of the IoT device (102, 300).

11. The IoT device (102, 300) of any of claims 8, 9 or 10, wherein the command module (311) is configured to execute the at least one command by setting a rule including a condition and an action to be executed if the condition is triggered.

12. The IoT device (102, 300) of claim 11, wherein the command module (311) is further configured to execute the at least one command by monitoring the at least one attribute to determine if the condition has been triggered and, if the condition has been triggered, execute the action.

13. The IoT device (102, 300) of claim 12, wherein the condition is whether a value associated with the attribute is above or below a threshold value and the action is transmitting an alert to at least one second device if the value is above or below the threshold value.

14. The IoT device (102, 300) of claims 8 or 9, wherein the text-based message includes a third notational identifier identifying the text-based message as being intended for at least one of the plurality of IoT devices (102, 300, 350).

15. A non-transitory computer readable medium storing executable program instructions to cause a computer executing the instructions to perform a method according to any of claims 1 to 7.
